# EUROPÄISCHE PATENTSCHRIFT

(11) **EP 2 223 590 B1**
(45) Veröffentlichungstag und Bekanntmachung des Hinweises auf die Patenterteilung: **17.06.2015**
(21) Anmeldenummer: 10003503.9
(22) Anmeldetag: 15.05.2004
(51) Int. Cl.: A01G 3/06

(54) **Elektromotorisch betriebene Grassschere**
Electrically powered grass shear
Cisaille à gazon à moteur électrique

(30) Priorität: 21.05.2003 DE 10324285
(43) Veröffentlichungstag der Anmeldung: 01.09.2010
(62) Teilanmeldung aus: 04011620.4
(73) Patentinhaber: HUSQVARNA AB, 561 82 Huskvarna (SE)
(72) Erfinder: Kohl, Peter, 89257 Illertissen (DE); Agostini, Johannes, 89257 Illertissen (DE)
(74) Vertreter: Finkele, Rolf

(56) Entgegenhaltungen:
- EP-A2- 0 826 300
- DE-C1- 3 916 145
- JP-A- 09 135 631
- US-A- 3 861 127

## Beschreibung

Die Erfindung betrifft eine elektromotorische betriebene Grasschere mit einem Schneidkopf mit Schneidmessern, der gegenüber einem Griffteil um eine Schwenkachse verstellbar ist.

Grasscheren dieser Art sind bekannt. Die EP 0 826 300 zeigt beispielsweise eine Akku-Rasenschere, bei der ein Scherenkopf um eine horizontale, in der Arbeitsrichtung verlaufende Achse gegenüber einem Griffteil schwenkbar ist, um eine Neigung des Scherkopfes einstellen zu können. Die Schwenkachse fällt dabei mit der Drehachse des Antriebsmotores zusammen, so dass eine zweckmäßige Bauform erreicht werden kann.

Auch die DE 39 16 145 C1 zeigt eine elektromotorisch angetriebene Handgrasschere, bei der der Schneidkopf gegenüber einem Handgriff um einen Drehgelenkzapfen verstellt werden kann, dessen Achse auch horizontal und in der Arbeitsrichtung verläuft. Diese Verstellmöglichkeiten lassen aber keine ergonomisch günstige Halterung und Führung der Grasschere zu.

Aus JP 09135631 ist eine Grasschere gemäß dem Oberbegriff von Anspruch 1 bekannt.

Der Erfindung liegt die Aufgabe zugrunde, eine ergonomisch günstige akkubetriebene Grasschere zu schaffen, bei der eine leichte Führung des Schneidkopfes über den Boden möglich ist.

Dazu sind am Schneidkopf, an sich bekannte, abnehmbare Führungsräder angeordnet.

In Weiterbildung der Erfindung kann dabei der Antriebsmotor im Schneidkopf untergebracht sein, während der Griffteil die Akkumulatoren aufnimmt und mit einem Bedienungsschalter versehen ist. Die Stromzuführung zum Antriebsmotor lässt sich problemlos durchführen, aber es sind keine Kraftübertragungseinrichtungen zwischen Griffteil und Schneidkopf erforderlich.

In vorteilhafter Ausgestaltung der Erfindung kann der Griffteil mit einer Aufnahmeöffnung für einen einsteckbaren Stiel versehen werden. Die Achse dieser Aufnahmeöffnung verläuft dabei senkrecht zu der Schwenkachse um die der Schneidkopf verstellbar ist und der Stiel kann um die Achse der Aufnahmeöffnung schwenkbar und arretierbar sein, so dass die Grasschere auch von einer Bedienungsperson in aufrechter Position benutzt werden kann. Insbesondere wenn der Stiel mit einer Abwinkelung im Bereich der Aufnahmeöffnung versehen ist, wird eine leichte und ergonomisch günstige Führung erreicht, bei der es auch möglich ist, die Ebene der Schneidmesser in der gewünschten Weise einzustellen, wenn beispielsweise Grasbewuchs im Bereich unterhalb von Hecken geschnitten werden sollen.

Die Erfindung ist anhand eines Ausführungsbeispiels in der Zeichnung dargestellt und wird im folgenden erläutert. Es zeigen:
- Fig. 1: eine schematische Seitenansicht einer elektromotorisch betriebenen Grasschere nach der Erfindung in zwei verschiedenen Schwenkstellungen des Griffteiles gegenüber dem Schneidkopf,
- Fig. 2: einen Längsschnitt durch die Mittelebene der Grasschere nach Fig. 1, und

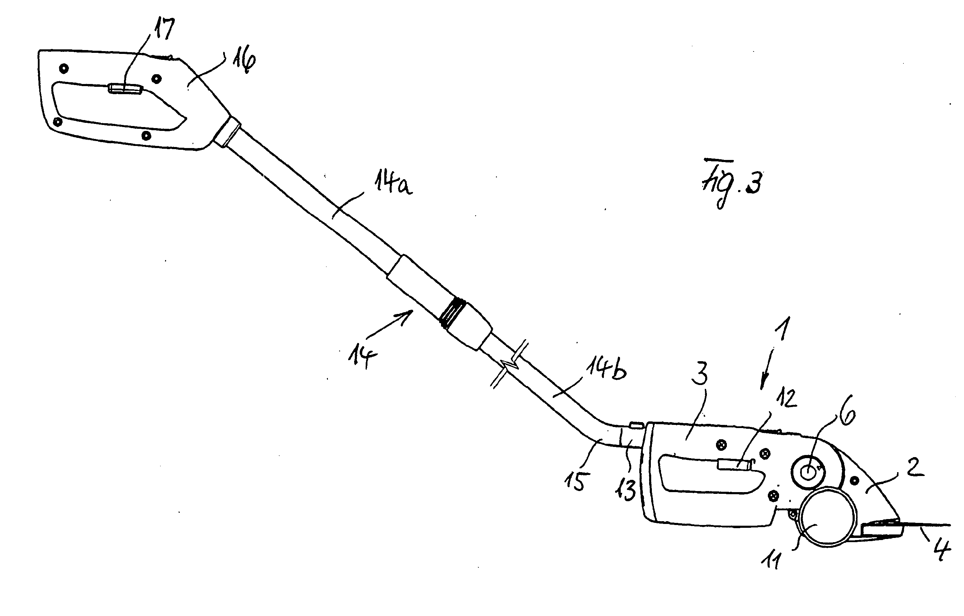

- Fig. 3: die Grasschere der Fig. 1 mit einem Führungsstiel mit eigenem Handgriff.

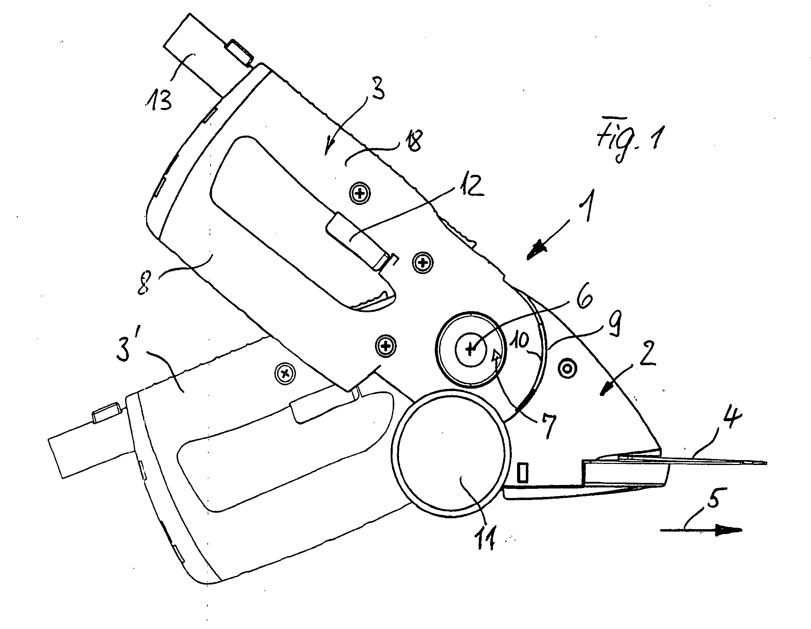

Die Fig. 1 zeigt eine Handgrasschere 1, die einen Schneidkopf 2 mit Schneidmessern 4 und einen gegenüber dem Schneidkopf 2 schwenkbaren Griffteil 3 aufweist. Die Schneidmesser 4 bestehen dabei in bekannter Weise aus einem oszillierenden Obermesser und einem feststehenden Untermesser, die in einer gemeinsamen Ebene verlaufen und durch Handbetätigung am Griffteil 3 in der Arbeitsrichtung 5 bewegt werden können.

Der Griffteil 3 ist um eine Schwenkachse 6 gegenüber dem Schneidkopf verschwenkbar, die quer zur Arbeitsrichtung 5 und parallel zu der Ebene verläuft, in der die Schneidmesser 4 angeordnet sind. Der Griffteil 3 lässt sich daher um diese Schwenkachse 6 von der dünn ausgezogenen Stellung 3' in die Stellung 3 nach Fig. 1 verschwenken und in der jeweiligen Schwenklage auch arretieren, was durch nicht näher gezeigte Klemmeinrichtungen an der Schwenkachse 6 geschehen kann. Die Schwenkachsenanordnung kann, wie schematisch angedeutet, auch mit Anzeigemarkierungen 7 ausgerüstet sein, mit deren Hilfe die gewünschte Schwenklage zwischen Griffteil 3 und Schneidkopf 2 nach außen angezeigt werden kann.

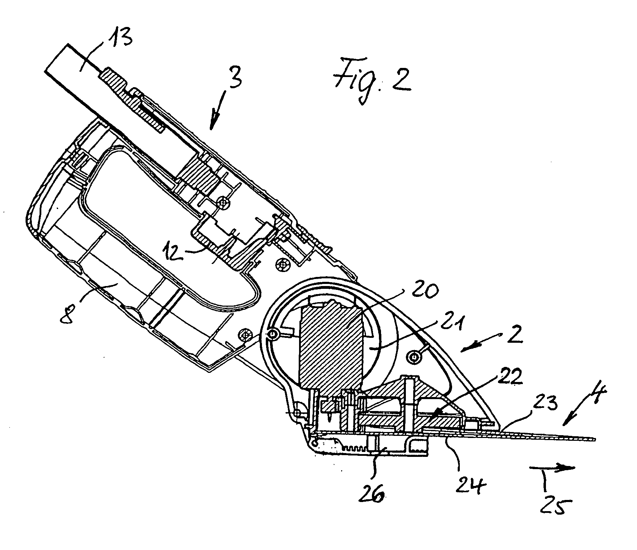

Der elektrische Antriebsmotor 20 für die Schneidmesser 4 ist innerhalb des Schneidkopfes 2 angeordnet. Der elektrische Antriebsmotor 20 ist dabei - siehe Fig. 2 - in einer zylindrischen Hohlkammer 21 angeordnet, die im Schneidkopf 2 gebildet ist. Die Achse der Hohlkammer 21 bildet die Schwenkachse 6 zwischen dem Griffteil 3 und dem Schneidkopf 2. Der Antriebsmotor 20 wirkt in an sich bekannter Weise auf einen Exzenterantrieb 22, der wiederum ein bewegliches Obermesser 23 der Messeranordnung 4 in Bewegung setzt, wobei der Messeranordnung 4 noch ein feststehendes Untermesser 24 zugeordnet ist. Die Messeranordnung 4 lässt sich aus der in Fig. 2 dargestellten Lage im Sinne des Pfeiles 25 abziehen und durch eine neue Messeranordnung ersetzen, wenn Verschleiß aufgetreten ist. Die Messeranordnung 4 wird dabei in einem Führungsschlitz zwischen dem Exzenterantrieb 22 und einem Schneidkopfunterteil 26 geführt und durch eine Arretierklappe gesichert, die in Fig. 2 jedoch nicht gezeigt ist. Die Akkumulatoren für den Betrieb des Elektromotors sind im unteren Arm 8 des Griffteiles 3 untergebracht und die Stromversorgung des Elektromotors kann in einfacher Weise durch Kabel vorgenommen werden, welche durch Schlitze in den seitlichen Wangen der Hohlkammer 21 und in den daran angrenzenden Teilen des Griffteiles 3 hindurchgeführt werden. Griffteil 3 und Schneidkopf 2 grenzen mit kreisbogenförmigen Führungen 9, 10 aneinander an. Am Schneidkopf 2 sind schließlich abnehmbare Räder 11 vorgesehen, welche die an sich bekannte Führung der Grasschere erlauben. Der Griffteil 3 ist mit einem Handschalter 12 ausgestattet, über den die Stromzuführung zum Antriebsmotor freigegeben oder unterbunden werden kann.

Der Griffteil 3 besitzt an seinem von der Schwenkachse 6 abgewandten Ende eine Einstecköffnung 13, die hier als eine hülsenförmige Führung ausgebildet ist, in die nach Fig. 2 das untere Ende eines Stieles 14 einschiebbar ist, der aus zwei teleskopartig gegeneinander verschiebbaren Rohrteilen 14a und 14b besteht, von denen das dem Griffteil 3 zugewandte Rohrteil 14b im Bereich dieses Griffteiles 3 eine Abknickung 15 besitzt.

Das obere Rohrteil 14a ist an seinem freien Ende mit einem Handgriff 16 ausgerüstet, der einen Betätigungsschalter 17 aufweist und über nicht näher gezeigte Verbindungskabel mit der mit dem Handschalter 12 des Griffteiles 3 verbundenen elektrischen Schaltanordnung in Verbindung steht. Durch Betätigung des Handschalters 17 kann daher der Antriebsmotor für die Schneidmesser 4 an- oder abgeschaltet werden und es wird möglich, die Handgrasschere 1 in weitgehend aufrechter Haltung über den Stiel 14 zu führen. Über die Abknickung 15 bleibt die Grasschere 1 dabei so ausgerichtet, dass ihre Schneidmesser parallel zum Boden verlaufen, wenn die Grasschere mit Hilfe der Räder 11 geführt ist.

Innerhalb der Hülse 13 kann eine Arretierung vorgesehen werden, mit der der Stiel 14 sowohl in Axialrichtung als auch in Umfangsrichtung festgehalten werden kann. Dabei kann die Arretierung mit entsprechenden Gegenstücken am Stiel 14 so zusammenwirken, dass das Stielende in der Hülse 13 auch in gewissem Umfang verschwenkt werden kann. Eine Führung der Grasschere 1 über den Stiel 14 ist daher auch dann möglich, wenn der Stiel 14 nicht in einer senkrecht durch die Ebene der Schneidmesser 4 verlaufenden Mittelebene steht.

Obwohl daher die Ausgestaltung der Grasschere 1 so getroffen ist, dass der Griffteil 3, insbesondere sein oberer von Hand zu umfassender Bügel 18 immer in der eben erwähnten Mittelebene durch die Schneidmesserebene steht, was eine ergonomisch günstige Führung der Grasschere ermöglicht, wird es durch Schwenken des Stieles jedenfalls auch möglich, die Schere bei Führung über den Stiel parallel zum Boden zu halten, obwohl die Führung von der Seite her erfolgt. Dies erlaubt weitere Einsatzmöglichkeiten der neuen Schere.

## Patentansprüche

1. Elektromotorisch betriebene Grasschere mit einem Schneidkopf (2) mit Schneidmessern (4), der gegenüber einem Griffteil (3) um eine Schwenkachse (6) verstellbar ist,
wobei die Schwenkachse (6) quer zur Arbeitsrichtung (5) und parallel zu der Ebene verläuft, in der die Schneidmesser (4) angeordnet sind,
**dadurch gekennzeichnet,**
**dass** am Schneidkopf (2) abnehmbare Führungsräder (11) angeordnet sind.

2. Grasschere nach Anspruch 1, **dadurch gekennzeichnet, dass** der Antriebsmotor (20) im Schneidkopf (2) untergebracht ist.

3. Grasschere nach Anspruch 2, **dadurch gekennzeichnet, dass** der Antriebsmotor (20) in einer um die Schwenkachse (6) gebildeten zylindrischen Hohlkammer (21) angeordnet ist.

4. Grasschere nach Anspruch 1, **dadurch gekennzeichnet, dass** der Griffteil (3) die Akkumulatoren aufnimmt und mit einem Bedienungsschalter (12) versehen ist.

5. Grasschere nach Anspruch 1, **dadurch gekennzeichnet, dass** der Griffteil (3) mit einer Aufnahmeöffnung (13) für einen einsteckbaren Stiel (14) versehen ist.

6. Grasschere nach Anspruch 5, **dadurch gekennzeichnet, dass** die Achse der Aufnahmeöffnung (13) senkrecht zu der Schwenkachse (6) verläuft, um die der Schneidkopf (2) verstellbar ist.

7. Grasschere nach Anspruch 6, **dadurch gekennzeichnet, dass** der Stiel (14) um die Achse der Aufnahmeöffnung (13) schwenkbar und arretierbar ist.

8. Grasschere nach Anspruch 7, **dadurch gekennzeichnet, dass** der Stiel (14) mit einer Abwinkelung (15) insbesondere im Bereich der Aufnahmeöffnung (13) versehen ist.

## Claims

1. Grass trimmer driven by an electric motor with a cutting head (2) with cutting blades (4), which is adjustable in relation to a handle part (3) about a pivot axis (6),
in which the pivot axis (6) runs transverse to the direction of operation (5) and parallel to the plane in which the cutting blades (4) are arranged,
**characterised in that**,
removable guide wheels (11) are arranged on the cutting head (2).

2. Grass trimmer according to claim 1, **characterised in that** the drive motor (20) is accommodated in the cutting head (2).

3. Grass trimmer according to claim 2, **characterised in that** the drive motor (20) is arranged in a cylindrical hollow chamber (21) formed about the pivot axis (6).

4. Grass trimmer according to claim 1, **characterised in that** the handle part (3) accommodates the batteries and is provided with an operating switch (12).

5. Grass trimmer according to claim 1, **characterised in that** the handle part (3) is provided with an accommodation opening (13) for a handle (14) that can be plugged in.

6. Grass trimmer according to claim 5, **characterised in that** the axis of the accommodation opening (13) runs vertically to the pivot axis (6) about which the cutting head (2) is adjustable.

7. Grass trimmer according to claim 6, **characterised in that** the handle (14) may pivot about the axis of the accommodation opening (13) and is lockable.

8. Grass trimmer according to claim 7, **characterised in that** the handle (14) is provided with a bend (15) in particular in the area of the accommodation opening (13).

## Revendications

1. Cisaille à gazon à moteur électrique avec une tête de coupe (2) avec des couteaux (4), réglables par rapport à une partie de préhension (3) autour d'un axe de pivotement (6),
l'axe de pivotement (6) s'étendant transversalement à la direction de travail (5) et parallèle au plan où sont disposés les couteaux (4),
**caractérisée en ce que** des roues de guidage amovibles (11) sont disposées sur la tête de coupe (2).

2. Cisaille à gazon selon la revendication 1, **caractérisée en ce que** le moteur d'entraînement (20) est logé dans la tête de coupe (2).

3. Cisaille à gazon selon la revendication 2, **caractérisée en ce que** le moteur d'entraînement (20) est disposé dans une chambre creuse (21) cylindrique formée autour de l'axe de pivotement (6).

4. Cisaille à gazon selon la revendication 1, **caractérisée en ce que** la partie de préhension (3) héberge les batteries et est munie d'un bouton de commande (12).

5. Cisaille à gazon selon la revendication 1, **caractérisée en ce que** la partie de préhension (3) est munie d'une ouverture de réception (13) pour un manche enfichable (14).

6. Cisaille à gazon selon la revendication 5, **caractérisée en ce que** l'axe de l'ouverture de réception (13) est perpendiculaire à l'axe de pivotement (6) autour duquel on peut régler la tête de coupe (2).

7. Cisaille à gazon selon la revendication 6, **caractérisée en ce que** le manche (14) est orientable et blocable autour de l'ouverture de réception (13)

8. Cisaille à gazon selon la revendication 7, **caractérisée en ce que** le manche (14) est muni d'un coude (15), en particulier à proximité de l'ouverture de réception (13).
